# EUROPÄISCHE PATENTANMELDUNG

(11) **EP 0 952 656 A1**
(43) Veröffentlichungstag der Anmeldung: **27.10.1999**
(21) Anmeldenummer: 99810196.8
(22) Anmeldetag: 05.03.1999
(51) Int. Cl.: H02K 9/10

(54) **Überströmkanäle eines Generators mit direkter Saugkühlung**

(30) Priorität: 23.04.1998 DE 19818149
(71) Anmelder: Asea Brown Boveri AG, 5401 Baden (CH)
(72) Erfinder: Hediger, Daniel, 5504 Othmarsingen (CH); Guerra, Gianfranco, 5242 Birr (CH)
(74) Vertreter: Kaiser, Helmut

(57) **Zusammenfassung**

Bei einem nach dem Saugkühlprinzip betriebenen Generator, bei welchem ein an der Rotorwelle (12) des Generators angebrachter Hauptventilator (11) von den wärmeerzeugenden Elementen des Generators erhitztes Kühlmedium aus dem Generator ansaugt und im wesentlichen senkrecht zur Achse dieser Rotorwelle (12) zu einer Kühlanordnung (23) transportiert, wobei das angesaugte und unter Drall mit hoher Geschwindigkeit vom Hauptventilator (11) ausgestossene Kühlmedium von einem Kühlkanalgehäuse (33) aufgenommen wird, welches das Kühlmedium über wenigstens eine strömungsmässige Engstelle (41) zur Kühlanordnung (23) lenkt, wird die Führung des Kühlmediums bei effizienter Vermeidung von Verwirbelungen und Druckabfällen dadurch erreicht, dass das Kühlkanalgehäuse (33) mindestens einen Überströmkanal (66) aufweist, welcher das vom Hauptventilator (11) in das Kühlkanalgehäuse (33) ausgestossene Kühlmedium über eine Einströmzone (58) vor der Engstelle (41) aufnimmt, das Kühlmedium um die Engstelle (41) herumleitet und es zu einer in Strömungsrichtung hinter der Engstelle (41) liegenden Ausströmzone (59) führt, wo das Kühlmedium wieder in das Kühlkanalgehäuse (33) strömt.

## Beschreibung

### TECHNISCHES GEBIET

Die vorliegende Erfindung bezieht sich auf das Gebiet der Generatoren. Sie betrifft einen nach dem Saugkühlprinzip betriebenen Generator, bei welchem ein an der Rotorwelle des Generators angebrachter Hauptventilator von den wärmeerzeugenden Elementen des Generators erhitztes Kühlmedium aus dem Generator ansaugt und im wesentlichen senkrecht zur Achse dieser Rotorwelle zu einer Kühlanordnung transportiert, wobei das angesaugte und unter Drall mit hoher Geschwindigkeit vom Hauptventilator ausgestossene Kühlmedium von einem Kühlkanalgehäuse aufgenommen wird, welches das Kühlmedium über wenigstens eine strömungsmässige Engstelle zur Kühlanordnung lenkt.

### STAND DER TECHNIK

Bei Generatoren, welche nach dem Saugkühlprinzip betrieben werden, wird das von den wärmeerzeugenden Elementen des Generators erhitzte Kühlmedium aus dem Generator von an der Rotorwelle befestigten Hauptventilatoren angesaugt. Normalerweise sind diese Hauptventilatoren stirnseitig und rückseitig des Generators angeordnet, und ein Kanalsystem leitet das von den Hauptventilatoren ausgeblasene Kühlmedium zu einer Kühlanordnung, welche meist unter dem Generator, in einer Fundamentgrube, liegt. Dem Kühlmedium wird anschliessend beim Durchströmen der sich im wesentlichen über die ganze Länge des Generators erstrekkenden Kühlanordnung Wärme entzogen und das kalte Medium tritt daraufhin in kanalisierter Weise auf der ganzen Länge wieder in das Innere des Generators zu den wärmeerzeugenden Elementen, einen geschlossenen Kühlkreislauf bildend.

Um den heutigen Anforderungen der Kühlung von Rotoren in Grenzleistungsmaschinen gerecht zu werden, sind immer effizientere und verlustfreiere Kanalisierungen der Kühlmediumströme unentbehrlich. Eine kritische Stelle der Kühlmediumströme ist in den kopf- und stirnseitigen Regionen gegeben, wo die Hauptventilatoren das erhitzte Kühlmedium aus dem Gene-ratorinnenraum aussaugen. Das heisse Kühlmedium tritt dort unter hohem Drall und mit gro-sser Geschwindigkeit in einen Kühlkanal, der die Aufgabe hat, das Kühlmedium nach unten zur Kühlanordnung zu kanalisieren. Um die Generatorlänge nicht unnötig zu vergrössern, ist dieser Kühl kanal möglichst schmal zu halten. Der vom Hauptventilator aus dem Generatorin-neren herausgesaugte Strom kann in zwei Komponenten zerlegt werden. Das Kühlmedium strömt parallel zur Rotorwelle aus dem Generatorinneren heraus, zusätzlich wird das Kühlmedium aber auch durch den Hauptventilator in Rotation versetzt. Der Kühlkanal lenkt diesen drallbehafteten Strom senkrecht zur Rotorwelle ab und sammelt den auf alle Richtungen senkrecht zur Rotorwelle aufgefächerten Strom in eine Richtung, nämlich nach unten.

Die Ablenkung des Kühlmediumstromes in den kreissymmetrischen Fächer senkrecht zur Rotorwelle wird dabei meist von einem sogenannten Plattendiffusor unterstützt. Dieser Plattendiffusor ist im wesentlichen eine Röhre, die den Hauptventilator umschliesst, und die sich in strömungsrichtung hinter dem Ventilator trompetenartig zu einem ebenen, senkrecht zur Rotorwelle und parallel zur Stimseite des Generators liegenden Kreisring öffnet. Dadurch wird das Kühlmedium unmittelbar beim Hauptventilator kanalisiert und dann kontrolliert aufgefächert. Das Kühlkanalgehäuse ist normalerweise gleichermassen ausgebildet wie das Gehäuse des Generators und umschliesst den Kühlkanal im wesentlichen kreisförmig, diejenige Seite, die in die Fundamentgrube führt, offenlassend, so dass das Kühlmedium nach unten weg-strömen kann.

Ein Problem dieser Kanalisierung des Kühlmediumstromes ist nun, dass mindestens ein Eng-pass im Kühlmediumstrom auftritt. Der ganze, nach oben und seitlich vom Ventilator ausgetriebene Kühlmediumstrom muss nämlich, da er drallbehaftet ist, durch eine Zone im Kühlkanal hindurchströmen. In dieser Zone, der Engstelle, die in Strömungsrichtung kurz vor der Öffnung des Kühlkanalgehäuses nach unten liegt, finden infolge der hohen Geschwindigkeiten Verwirbelungen und Strömungsabrisse des Kühlmediums statt. Die damit verbundenen Druckabfälle reduzieren die Effizienz des Kühlmediumdurchsatzes auf inakzeptable Weise.

### DARSTELLUNG DER ERFINDUNG

Der Erfindung liegt demnach die Aufgabe zugrunde, eine Kanalisierung des Kühlmediumstromes vom Hauptventilator zur Kühlanordnung zur Verfügung zu stellen, die
- die hohen Kühlmediumgeschwindigkeiten an der Engstelle vermindert und die Strömung vergleichmässigt,
- eine kompakte Bauweise in axialer Richtung des Generators erlaubt (kurze Maschinen-hauslänge),
- geringe mechanische Spannungen im Rotor (kurze Lagerabstände) erzeugt,
- bessere Möglichkeiten zur Verfügung stellt, die Rotordynamik zu beeinflussen (Variation von Lagerabständen und/oder Wellenhalsdurchmessern).

Diese Aufgabe wird bei einem Generator der eingangs genannten Art dadurch gelöst, dass das Kühlkanalgehäuse mindestens einen Überströmkanal aufweist, welcher das vom Hauptventilator in das Kühlkanalgehäuse ausgestossene Kühlmedium über eine Einströmzone vor der Engstelle aufnimmt, das Kühlmedium um die Engstelle herumleitet und es zu einer in Strömungsrichtung hinter der Engstelle liegenden Ausströmzone führt, wo das Kühlmedium wieder in das Kühlkanalgehäuse strömt.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: Schematische Darstellung eines Generators mit Saugkühlprinzip;
- Fig. 2: Ursprungskonzept des Kühlkanalgehäuses;
- Fig. 3: Fig. 2 Kühlkanalgehäuse mit aussenliegenden Überströmkanälen;
- Fig. 4: Kühlkanalgehäuse mit inneren Überströmkanälen, und
- Fig. 5: Generator mit Kühlkanalgehäuse mit aussenliegenden Überströmkanälen, perspektivische Ansicht.

### WEGE ZUR AUSFÜHRUNG DER ERFINDUNG

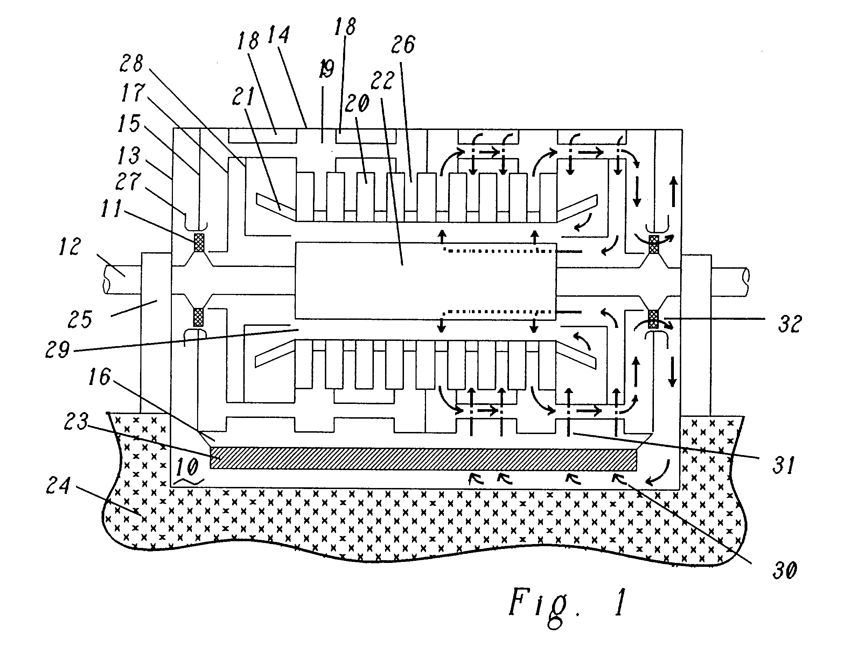

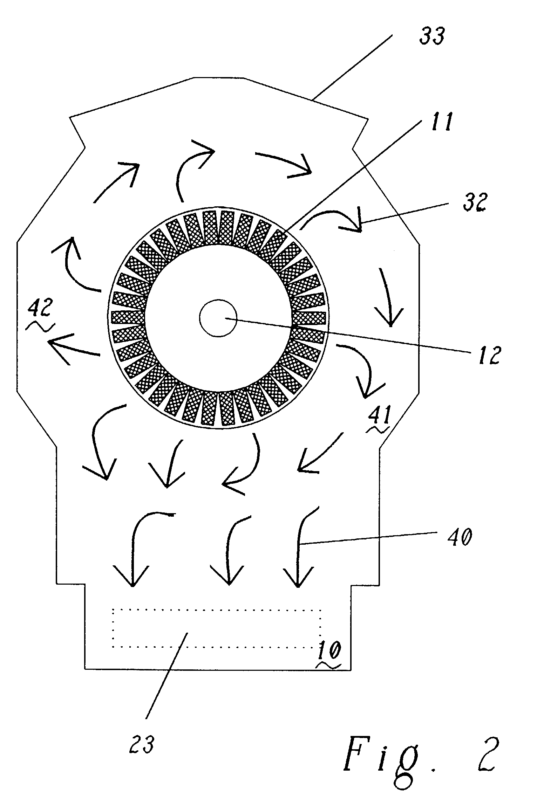

Figur 1 zeigt einen schematischen Längsschnitt durch einen im Saugkühlprinzip betriebenen Generator. Der Generator ist stirnseitig und rückseitig von Maschinengehäusedeckeln 13 begrenzt und längs von einem zylindrischen Maschinengehäuse 14 umfasst. Das Gehäuse umfasst einen aus Teilblechkörpern 20 gebildeten Statorblechkörper, in welchem radiale Belüftungsschlitze 26 zwischen den verschiedenen Teilblechkörpern 20 vorhanden sind. Ein Rotor 22 befindet sich im Zentrum des Statorblechkörpers und die zugehörige Rotorwelle 12 ist in Bocklagern 25 gelagert, welche auf dem Fundament 24 aufliegen.

Das Fundament 24 weist eine Fundamentgrube 10 auf, die sich axial über die ganze Länge des Maschinengehäuses 24 erstreckt und im wesentlichen die gesamte Breite des Maschinengehäuses 24 einnimmt. In dieser Fundamentgrube 10 ist eine Kühlanordnung 23 des Generators angeordnet. Dabei stehen die Eintrittsöffnungen der Kühlanordnung 23 mit Ausström-räumen von beiderseits des Rotors 22 angeordneten Hauptventilatoren 11 in Verbindung und die Austrittsöffnungen der Kühlanordnung 23 münden in einen Ausgleichsraum 16. Der Hauptventilator 11 ist dabei mit der Rotorwelle 12 fest verbunden und dreht sich mit der gleichen Geschwindigkeit wie der Rotor 22. Die Strömungswege des durch den Generator strömenden Kühlgases ist mit Pfeilen angedeutet. Der Kühlkreislauf ist nur in einer Maschinenhälfte angedeutet, da das Strömungsverhalten im wesentlichen symmetrisch ist.

Bei dem vorliegenden Kühlprinzip handelt es sich um eine sogenannte Revers- oder Saugkühlung, bei der Heissgas 30,32 mittels Ventilatoren 11 der Kühlanordnung 23 zugeführt wird. In strömungsrichtung hinter der Kühlanordnung 23 verteilt sich der kalte Kühlgasstrom 31 im Ausgleichsraum 16 auf die Kaltgaskammern 18, wobei sich Teilströmungen ausbilden. Ein erster Teilstrom strömt zwischen Leitblechen 28 und einer Innenverschalung 17 direkt zum Rotor 22, ein zweiter strömt durch den Wickelkopf 21 in den Maschinenluftspalt 29 zwischen Rotor und Stator, und ein dritter Kühlgasstrom gelangt durch die Kaltgaskammern 18 und Belüftungsschlitze 26 in den Maschinenluftspalt 29. Aus dem Maschinenluftspalt 29 wird der Kühlgasstrom von den Hauptventilatoren 11 durch Belüftungsschlitze 26 und die Heissgas-kammern 19 zwischen die Innenverschalung 17 und eine Aussenverschalung 15 gesaugt. Anschliessend wird die vom Hauptventilator 11 angetriebene Luft 32 von einem Plattendiffusor 27 umgelenkt und durch das Kühlkanalgehäuse 33 in die Fundamentgrube 10 zur Kühlanordnung 23 geführt.

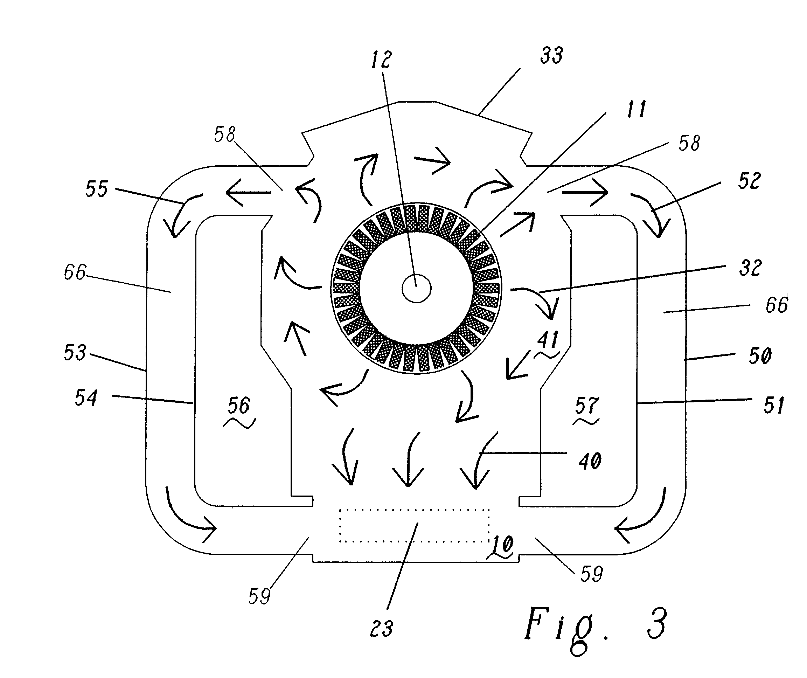

Figur 2 zeigt einen schematischen Schnitt durch ein normalerweise verwendetes Kühlkanalgehäuse 33 senkrecht zur Rotorwelle 12, parallel zum Maschinengehäusedeckel 13, in einer Ansicht entgegen der Richtung des vom Hauptventilator 11 ausgeblasenen Kühlgases. Sichtbar sind der Haupventilator 11 und die Rotorwelle 12, angedeutet sind ausserdem die Fundamentgrube 10 und die Kühlanordnung 23. Mit Pfeilen ist wiederum der Kühlgasstrom vom Hauptventilator 11 zur Kühlanordnung 23 bezeichnet. In der hier gegebenen Sicht des Generators rotiert der Hauptventilator 11 im Uhrzeigersinn. Der Kühlgasstrom 32 verlässt den Hauptventilator 11 mit einem Drall in Uhrzeigersinn, welcher Drall zur Folge hat, dass Kühlgas, das oberhalb einer Wirbelstelle 42 ( >8 Uhr) austritt durch den ganzen oberen Teil des Kühlkanalgehäuses 33 getrieben wird, bevor es nach unten in die Fundamentgrube 10 gelangt, und nur das in einem kleinen Austrittsektor (6 bis 8 Uhr) ausgetriebene Kühlgas gewissermassen direkt nach unten gelangt. Diese strömungs- und drallbedingte Sammlung des Kühlgases führt dazu, dass im wesentlichen zwei Drittel des vom Hauptventilator 11 ausgetriebenen Kühlgases durch eine Engstelle 41 hindurchtreten müssen. Dies führt an dieser Engstelle 41 zu überhöhten Strömungsgeschwindigkeiten des Kühlgases und damit bevorzugt zu Strö-mungsabriss und Druckverlusten. Diese Druckverluste erniedrigen den Kühlmediumdurchsatz empfindlich und reduzieren damit die Effizienz der Saugkühlung.

Figur 3 zeigt einen der Figur 2 analogen schematischen Schnitt durch ein erfindungsmässiges Kühlkanalgehäuse 33 des ersten Ausführungsbeispiels. Das in Figur 2 angegebene, normalerweise verwendete Kühlkanalgehäuse 33 ist hier durch zwei symmetrisch beidseitig des Generators angeordnete Überströmkanäle 66 erweitert. Wie an den angegebenen, die Strömung des Kühlgases symbolisierenden Pfeilen erkennbar, erlaubt ein linker Überstromkanal 66 die Aufnahme von im Sektor zwischen ca. 8 und 11 Uhr vom Hauptventilator 11 ausgetriebenem Kühlgas über eine Einströmzone 58. Das in diese Einströmzone 58 eingedrungene Kühlgas 55 wird nun zwischen der Innenwand 54 und der Aussenwand 53 des Überstromkanals 66 nach unten geführt. Der Überstromkanal 66 endet unten direkt in der Fundamentgrube 10, wo das Kühlgas dann über eine Ausströmzone 59 in der Nähe der Kühlanordnung 23 in den Kühlkanal ausströmt. Dieser erste, linke Überstromkanal reduziert also die zuvor durch die Engstelle 41 hindurchtretende Kühlgasmenge um näherungsweise ein Drittel.

Das im Sektor zwischen ca. 11 und 1 Uhr ausgetriebene Kühlgas wird im symmetrisch dazu auf der rechten Seite des Generators angebrachten Überstromkanal 66 analog nach unten transportiert. Das Kühlgas 52 tritt über eine rechte Einströmzone 58 in den Überstromkanal 66 ein und wird zwischen der Innenwand 51 und der Aussenwand 50 des Kanals nach unten geführt. Wiederum in der Fundamentgrube 10 tritt es über eine Ausströmzone 59 wieder in den Kühlkanal ein, in der unmittelbaren Nähe der Kühlanordnung 23. Dieser zweite, rechte Über-stromkanal reduziert also die zuvor durch die Engstelle 41 hindurchtretende Kühlgasmenge um näherungsweise ein weiteres Drittel.

Beide Überstromkanäle 66 reduzieren damit die durch die Engstelle hindurchtretende Kühlgasmenge, so dass durch die erfindungsmässige Ausbildung des Kühlkanalgehäuses nur noch ca. ein Drittel der normalerweise durch die Engstelle 41 gepressten Gasmenge die Engstelle 41 passiert. Damit gleichen sich die Kühlgasgeschwindigkeiten im Kanalsystem aus und effizienzmindernde Druckabfälle können verhindert werden.

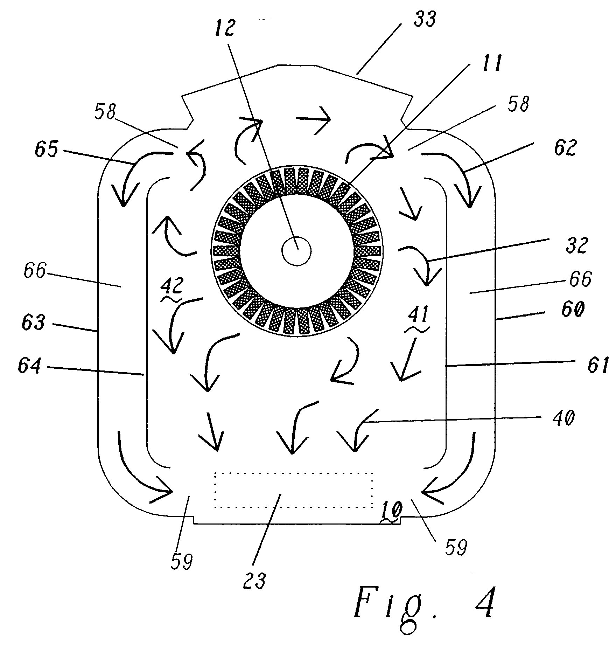

Figur 4 zeigt ein weiteres Ausführungsbeispiel, in welchem der analoge Effekt erreicht wird, die Überstromkanäle aber nicht vollständig vom Kühlkanalgehäuse 33 über Zwischenräume 56,57 abgetrennt sind, sondern vielmehr als Erweiterungen des Kühlkanalgehäuses 33 ausgebildet sind. Die Überstromkanäle 66 sind dabei innenseitig von Trennwänden begrenzt, welche gleichzeitig die Aussenwände des Kühlkanalgehäuses bilden. Wiederum verfügen die Über-stromkanäle 66 über Einströmzonen 58 im oberen Bereich des Kühlkanalgehäuses 33 und über Ausströmzonen 59, welche in der Fundamentgrube liegen. Die Strömungsverhältnisse sind im wesentlichen dieselben wie in Figur 3 beschrieben, nur erlaubt diese Bauweise eine in seitlicher Richtung kompaktere Anordnung.

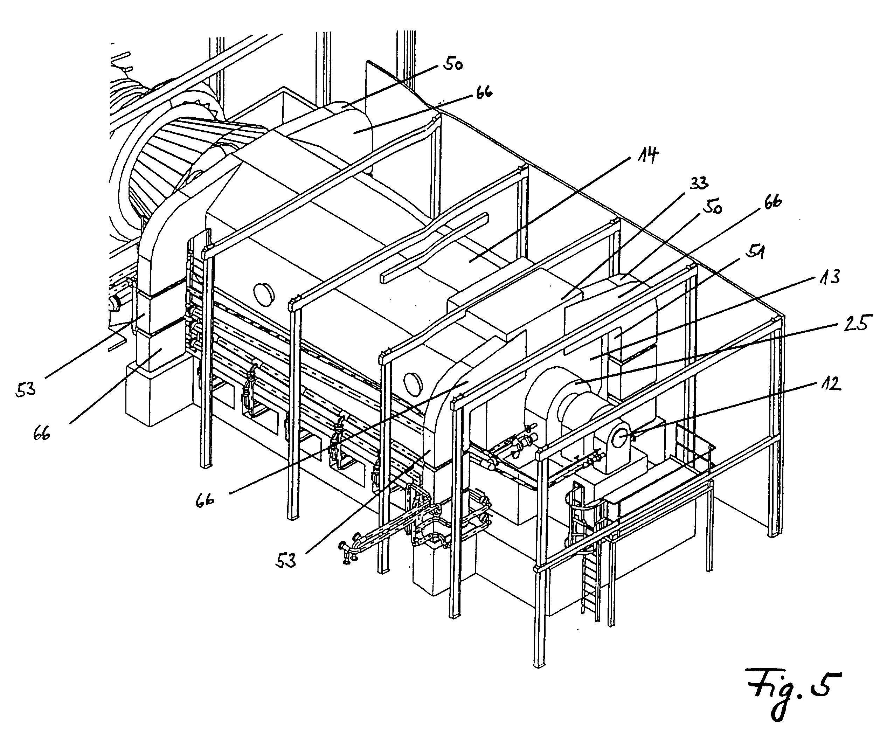

Figur 5 zeigt eine perspektivische Ansicht des ersten, in Figur 3 beschriebenen Ausführungsbeispiels. Es lässt sich erkennen, dass die derartige Anordnung von Überstromkanälen in axialer Richtung keine Erweiterung des Maschinengehäuses verlangt, und dass bei den normalerweise verwendeten Maschinengehäusen auch die seitliche Erweiterung gut in den allgemeinen Generatorumfang eingepasst werden kann. Ausserdem sieht man, dass beide Kühlkanalgehäuse 33, das stim- sowie das rückseitige, bevorzugt mit Überstromkanälen 66 versehen werden, derart, dass die Kühlmittelströme beider Generatorhälften optimal geführt werden. Im dargestellten Ausführungsbeispiel beträgt der Gesamtquerschnitt der beiden Überströmkanäle im oberen Gehäusebereich ca. 30%, der Kanal im unteren Gehäusebereich ca. 70%.

### BEZEICHNUNGSLISTE

- 10: Fundamentgrube
- 11: Hauptventilator
- 12: Rotorwelle
- 13: Maschinengehäusedeckel
- 14: zylindrisches Maschinengehäuse
- 15: Aussenverschalung
- 16: Ausgleichsraum
- 17: Innenverschalung
- 18: Kaltgaskammer
- 19: Heissgaskammer
- 20: Teilblechkörper
- 21: Wickelkopf
- 22: Rotor
- 23: Kühlanordnung
- 24: Fundament
- 25: Bocklager
- 26: Belüftungsschlitze
- 27: Plattendiffusor
- 28: Leitblech
- 29: Maschinenluftspalt
- 30: Heissluft vor 23
- 31: Kaltluft nach 23
- 32: Heissluft beim 11
- 33: Kühlkanalgehäuse
- 40: Zur 23 strömende Heissluft
- 41: Engstelle
- 42: Wirbelstelle
- 50: Aussenwand des rechten Überstomkanals
- 51: Innenwand des rechten Überstromkanals
- 52: Heissluft im rechten Überstromkanal
- 53: Aussenwand des linken Überstomkanals
- 54: Innenwand des linken Überstromkanals
- 55: Heissluft im linken Überstromkanal
- 56: Zwischenraum linker Überstromkanal
- 57: Zwischenraum rechter Überstromkanal
- 58: Einströmzone
- 59: Ausströmzone
- 60: Aussenwand des rechten Überstomkanals
- 61: Trennwand des rechten Überstromkanals
- 62: Heissluft im rechten Überstromkanal
- 63: Aussenwand des linken Überstomkanals
- 64: Trennwand des linken Überstromkanals
- 65: Heissluft im linken Überstromkanal
- 66: Überstromkanal

## Patentansprüche

1. Nach dem Saugkühlprinzip betriebener Generator, bei welchem ein an der Rotorwelle (12) des Generators angebrachter Hauptventilator (11) von den wärmeerzeugenden Elementen des Generators erhitztes Kühlmedium aus dem Generator ansaugt und im wesentlichen senkrecht zur Achse dieser Rotorwelle (12) zu einer Kühlanordnung(23) transportiert, wobei das angesaugte und unter Drall mit hoher Geschwindigkeit vom Hauptventilator (11) ausgestossene Kühlmedium von einem Kühlkanalgehäuse (33) aufgenommen wird, welches das Kühlmedium über wenigstens eine strömungsmässige Engstelle (41) zur Kühlanordnung (23) lenkt
dadurch gekennzeichnet, dass
das Kühlkanalgehäuse (33) mindestens einen Überströmkanal (66) aufweist, welcher das vom Hauptventilator (11) in das Kühlkanalgehäuse (33) ausgestossene Kühlmedium über eine Einströmzone (58) vor der Engstelle (41) aufnimmt, das Kühlmedium um die Engstelle (41) herumleitet und es zu einer in Strömungsrichtung hinter der Engstelle (41) liegenden Ausströmzone (59) führt, wo das Kühlmedium wieder in das Kühlkanalgehäuse (33) strömt.

2. Generator nach Anspruch 1, dadurch gekennzeichnet, dass das aus dem Generator vom Hauptventilator (11) angesaugte Kühlmedium von einem kreisförmigen Plattendiffusor (27) zunächst parallel zur Rotorwelle kanalisiert, und anschliessend in Verwirbelungen vorbeugender Weise senkrecht zur Rotorwelle in das Kühlkanalgehäuse (33) umlenkt.

3. Generator nach einem der Ansprüche 1 oder 2, dadurch gekennzeichnet, dass sowohl das Kühlkanalgehäuse (33) als auch die Überströmkanäle (66) in einer gemeinsamen Ebene senkrecht zur Achse der Rotorwelle liegen.

4. Generator nach einem der Ansprüche 1 bis 3, dadurch gekennzeichnet, dass die Kühlanordnung (23) unterhalb des Generators angeordnet ist, und dass das Kühlmedium vom Kühlkanalgehäuse (33) nach unten geleitet wird.

5. Generator nach Anspruch 4, dadurch gekennzeichnet, dass die Kühlanordnung (23) in einer Fundamentgrube (10) des Generators angeordnet ist.

6. Generator nach Anspruch 5, dadurch gekennzeichnet, dass die Einströmzonen (58) der Überströmkanäle (66) im oberen Bereich des Kühlkanalgehäuses (33) liegen und dass die Ausströmzonen (59) im unteren, in der Fundamentgrube (10) des Generators liegenden Bereich angeordnet sind.

7. Generator nach Anspruch 6, dadurch gekennzeichnet, dass zwei Überströmkanäle (66) ausgebildet sind, die im wesentlichen symmetrisch auf beiden Seiten der Achse des Generators angeordnet sind.

8. Generator nach Anspruch 7, dadurch gekennzeichnet, dass die Überströmkanäle (66) das Kühlkanalgehäuse (33) radial seitlich umlaufen, nach der radial seitlichen Aussenseite des Generators von Aussenwänden (50,53) und nach der radial inneren, dem Kühlkanalgehäuse (33) zugewandten Seite von Zwischenräume (56,57) bildenden Innenwänden (51,54) begrenzt werden, und dass die Überströmkanäle (66) das vom Hauptventilator (11) in den oberen Teil des Kühlkanalgehäuses (33) ausgestossene Kühlmedium über die obere Einströmzone (58) aufnehmen und nach unten in die Fundamentgrube (10) leiten, wo das Kühlmedium über die untere Ausströmzone (59) der Kühlanordnung (23) zugeführt wird.

9. Generator nach Anspruch 8, dadurch gekennzeichnet, dass die Überströmkanäle (66) das Kühlkanalgehäuse (33) radial seitlich erweitem, nach der radial seitlichen Aussenseite des Generators von Aussenwänden (60,63) und nach der radial inneren, dem Hauptventilator (11) zugewandten Seite von Trennwänden (61,64) begrenzt werden, welche Trennwände (61,64) damit die seitlichen Wände des Kühlkanalgehäuses (33) bilden, und dass die Überströmkanäle (66) das vom Hauptventilator (11) in den oberen Teil des Kühlkanalgehäuses (33) ausgestossene Kühlmedium über die obere Einströmzone (58) aufnehmen und nach unten in die Fundamentgrube (10) leiten, wo das Kühlmedium über die untere Ausströmzone (59) der Kühlanordnung (23) zugeführt wird.

10. Generator nach einem der Ansprüche 1 bis 9, dadurch gekennzeichnet, dass als Kühlmedium Luft eingesetzt wird.
